# FASCICULE DE BREVET EUROPEEN

(11) **EP 1 801 534 B1**
(45) Date de publication et mention de la délivrance du brevet: **10.03.2010**
(21) Numéro de dépôt: 06291994.9
(22) Date de dépôt: 20.12.2006
(51) Int. Cl.: F42B 10/64, B29C 45/14

(54) **Dispositif de mesure de la position angulaire d'une ailette ou gouverne d'un projectile et procédé de montage d'un tel dispositif**
Messvorrichtung der Drehposition einer Schaufel oder Steuerfläche eines Projektiles sowie Montageverfahren
Device for measuring the angle position of a fin or control surface of a projectile and method of installing such a device

(30) Priorité: 26.12.2005 FR 0513310
(43) Date de publication de la demande: 27.06.2007
(73) Titulaire: NEXTER Munitions, 78000 Versailles (FR)
(72) Inventeur: Magnan, Pierre, 18110 Saint Palais (FR); Peron, Jean-Luc, 18000 Bourges (FR)
(74) Mandataire: Célanie, Christian

(56) Documents cités:
- EP-A- 0 506 536
- EP-A- 0 525 442
- EP-A- 0 642 026
- US-A- 5 975 461

## Description

Le domaine technique de l'invention est celui des dispositifs permettant de mesurer la position angulaire d'une ailette ou d'une gouverne de projectile.

Il est connu de mesurer la position angulaire d'un organe et notamment d'une ailette ou gouverne en utilisant un capteur angulaire électronique.

Les capteurs connus sont des composants monoblocs comprenant un corps portant un axe rotatif. Il suffit de relier l'axe du capteur à l'axe de l'ailette ou de la gouverne pour mesurer les débattements dudit axe. On réalise le plus souvent une telle liaison par des organes annexes, tels des pignons intermédiaires.

Un capteur classique est un capteur de type transformateur rotatif qui comprend un rotor en fer doux feuilleté monté pivotant par rapport à un stator comprenant au moins deux bobinages, un bobinage inducteur et un bobinage induit.

Cependant une telle solution présente des inconvénients lorsqu'elle est mise en oeuvre dans un projectile et plus particulièrement dans un projectile tiré par canon.

En effet, les éléments intermédiaires tels que les pignons présentent des jeux fonctionnels qui conduisent à une erreur au niveau de la mesure du positionnement angulaire de l'ailette ou de la gouverne.

Par ailleurs, le montage des capteurs est compliqué. Il impose la mise en place de pièces intermédiaires et nécessite un certain volume. Un tel montage résiste par ailleurs mal à l'accélération de tir d'un projectile.

Le Brevet EP-0506536 décrit un dispositif déploiement d'ailettes de projectile dans lequel on associe dans un même boîtier, un moteur électrique et un moteur mécanique à ressort. Le moteur électrique entraîne un arbre dont l'extrémité avant forme une fourche destinée à entraîner une ailette qui n'est pas représentée. Un capteur de position angulaire est disposé en arrière du moteur électrique. Ce capteur comporte un stator fixé à la partie arrière du boîtier et un rotor fixé à l'arbre. Le capteur est ici complètement incorporé au moteur. Ainsi, le stator n'est pas solidaire d'un axe de l'ailette mais fixé sur un arbre entraînant l'ailette ce qui peut être une source de jeux indésirables, par exemple dus aux variations de températures ou à la différence de nature des matériaux utilisés.

Le brevet EP-0642026 décrit un procédé de fabrication d'un capteur de rotation comportant un corps qui renferme un aimant en contact avec une tige formant pôle magnétique. Un bobinage entoure la tige. Ce capteur est destiné à être approché d'une roue portant des dentures. Le passage des dentures à proximité de la tige fait varier le flux du champ magnétique passant au travers de la tige. Il en résulte une modulation de tension aux bornes du bobinage qui permet de mesurer la vitesse de rotation de la roue. Il s'agit ici de mesurer une vitesse de rotation et non pas un angle de pivotement. On notera en particulier qu'il n'y a dans le capteur décrit aucune pièce mobile, donc ni rotor ni stator.

L'invention a pour but de proposer un procédé de montage d'un dispositif de mesure de la position angulaire d'une ailette ou d'une gouverne ne présentant pas de tels inconvénients.

Le dispositif est ainsi de montage simple, il occupe un volume réduit et assure une mesure du positionnement angulaire de l'ailette ou de la gouverne, avec un niveau d'erreur minimisé.

Le dispositif est par ailleurs extrêmement robuste et résiste sans dommages au coup de canon.

Ainsi, l'invention a pour objet un procédé de montage d'un dispositif de mesure de la position angulaire d'une ailette ou gouverne de projectile montée pivotante par rapport à un support solidaire du corps du projectile, dispositif comportant un rotor solidaire d'un axe de l'ailette ou de la gouverne, un stator bobiné fixé au support et au moins deux bobinages, un bobinage inducteur et un bobinage induit, le rotor coopérant avec le stator constituer un transformateur rotatif, dans lequel :
- on dispose le stator au fond d'un alésage porté par le support et destiné à recevoir l'axe de l'ailette ou de la gouverne,
- le stator étant rendu solidaire du support par un matériau de surmoulage et le support comportant au moins deux orifices permettant de relier l'alésage recevant le stator et l'extérieur,
- on place le stator sur un outillage comportant une première portée cylindrique coopérant avec un alésage du stator porté par le support et destiné à recevoir l'axe de l'ailette ou de la gouverne et une deuxième portée cylindrique de même diamètre qu'un alésage du support destiné à recevoir le stator,
- on introduit l'outillage portant le stator dans l'alésage du support,
- on injecte un matériau de surmoulage entre le stator et le support au travers d'au moins un orifice reliant ledit alésage à l'extérieur.
- l'outillage comportant un trou radial permettant le positionnement d'une tige au travers d'une lumière du support, la tige assurant un positionnement axial de l'outillage et du stator.

On pourra réaliser l'outillage en polytétrafuoréthylène, et on chauffera alors le support après mise en place de l'outillage de façon à dilater ce dernier.

On refroidira le support après injection et séchage du matériau de surmoulage de façon à contracter l'outillage pour faciliter son extraction.

On fixera par ailleurs le rotor à l'axe de l'ailette ou de la gouverne puis on positionne celui ci dans le support et on mesure la valeur angulaire donnée par le dispositif de mesure pour une position de l'ailette ou de la gouverne correspondant à un angle nul.

On pourra ensuite corriger l'écart angulaire mesuré en faisant pivoter le rotor d'un angle inverse à la valeur ainsi mesurée, puis on immobilise le rotor par rapport à l'axe de l'ailette ou de la gouverne par un moyen de solidarisation.

L'invention sera mieux comprise à la lecture de la description qui va suivre d'un mode particulier de réalisation, description faite en référence aux dessins annexés et dans lesquels :
- la figure 1 est une vue schématique d'une partie de projectile portant des gouvernes,
- la figure 2 est une vue de l'axe de la gouverne,
- les figures 3a et 3b sont deux vues partielles du support de gouverne, la figure 3a étant une coupe réalisée suivant le plan dont la trace AA est repérée à la figure 3b,
- la figure 4 montre une première étape du procédé de montage selon l'invention,
- la figure 5 montre une deuxième étape du procédé de montage selon l'invention,
- la figure 6 est une vue frontale du rotor seul.
- la figure 7 montre le dispositif assemblé.

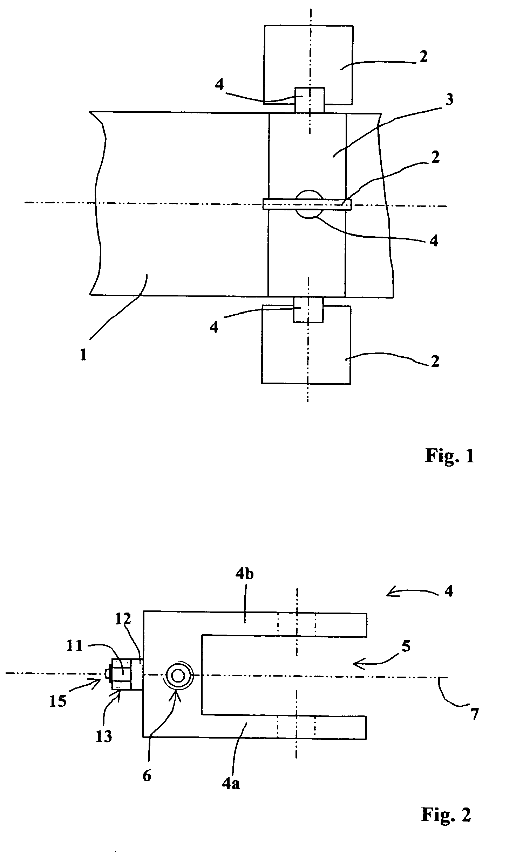

La figure 1 montre de façon schématique un projectile 1 portant quatre ailettes 2 qui sont ici des gouvernes canards déployables.

Ces gouvernes sont solidaires d'un support 3 renfermant un moyen de pilotage ou servomécanisme qui assure leur entraînement en rotation pour réaliser le pilotage du projectile. Ce moyen n'est pas représenté en détails et il pourra comporter deux ou quatre moto réducteurs (un par canard ou bien un par plan de pilotage).

Le projectile 1 est par exemple un projectile tiré par un canon en direction d'un objectif.

Lorsque le projectile se trouve à l'intérieur du tube d'une arme (non représentée) les canards sont repliés le long du corps du projectile 1 ou bien ils se logent dans le corps du projectile. Ils se déploient à la sortie du tube pour assurer leurs fonctions de stabilisation ou de pilotage.

Les mécanismes de déploiement d'ailettes ou de gouvernes ainsi que les moyens d'entraînement des gouvernes canards sont bien connus de l'Homme du Métier et ne font pas partie de la présente invention. On pourra se reporter aux brevets FR2846079, FR2846080 et FR2864613 ainsi qu'à la demande de brevet FR05-10164 qui décrivent de tels mécanismes.

Chaque gouverne 2 est solidaire d'un axe 4 monté pivotant par rapport au support 3.

La figure 2 montre plus particulièrement un axe 4. Ce dernier est globalement cylindrique et comporte une entaille 5 qui délimite deux branches 4a et 4b formant une chape sur laquelle se monte et s'articule la gouverne 2.

L'axe 4 comporte à sa partie arrière un taraudage 6 qui est destiné à recevoir une tige (non représentée) qui est reliée par une rotule à un bras de manoeuvre (non représenté) reliant l'axe 4 à la motorisation de la gouverne.

Le bras de manoeuvre permet de faire pivoter l'axe 7 autour de son axe géométrique 7.

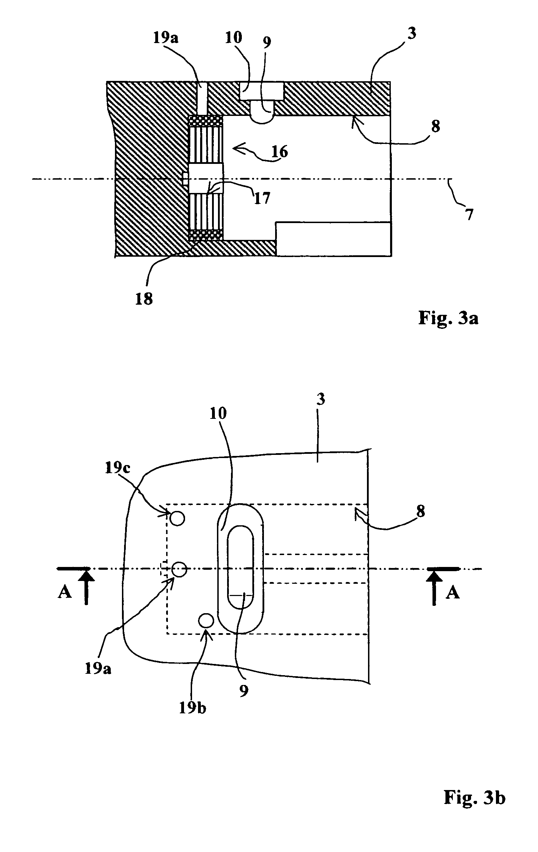

La figure 3a montre le support 3 seul et coupé au niveau d'un alésage 8 qui est destiné à recevoir l'axe 4 de la gouverne 2. Cet alésage a donc même axe géométrique 7 et même diamètre que l'axe 4 de la gouverne.

Une lumière 9 est destinée à laisser passer la tige de manoeuvre de l'axe 4. Cette lumière est entourée par un lamage oblong 10. Le support 3 comporte par ailleurs des orifices 19a, 19b et 19c qui permettent de relier l'alésage 8 et l'extérieur. La fonction de ces orifices sera décrite ultérieurement.

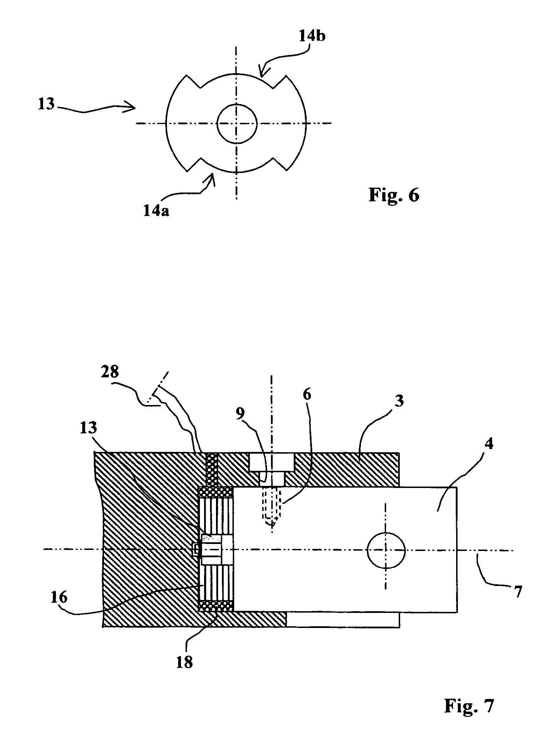

Comme cela est visible sur la figure 2, l'axe 4 comporte un prolongement cylindrique 11 sur lequel est fixé un rotor 13 d'un transformateur rotatif. Le rotor est plus particulièrement visible sur la figure 6. Il est constitué par un empilement de feuilles de fer doux (parallèles au plan de la figure 6) collées les unes aux autres et il présente deux encoches symétriques 14a et 14b sur sa périphérie.

Le rotor 13 est en appui contre un épaulement 12 de l'axe 5 et il est rendu solidaire de l'axe par un moyen approprié par exemple par un montage 15 associant une vis et une rondelle, la vis étant engagée dans un taraudage porté par l'extrémité du prolongement 11. On complètera de préférence le montage par un point de colle (le collage sera réalisé après le réglage comme cela sera décrit par la suite).

On voit par ailleurs sur la figure 3a que l'alésage 8 renferme un stator bobiné 16 qui porte un alésage 17 destiné à recevoir le rotor 13.

Le stator est représenté ici de façon schématique. Ce composant comporte lui aussi une armature en fer doux feuilleté autour de laquelle sont disposés au moins deux bobinages, un bobinage inducteur et un (ou deux) bobinage(s) induit(s).

Les bobinages ne sont pas représentés sur les figures mais un tel composant est bien connu de l'Homme du Métier du domaine des transformateurs rotatifs.

Le rotor 13 associé au stator 16 constitue un transformateur rotatif permettant de mesurer un angle.

Conformément à la technologie de ces transformateurs (ou potentiomètres inductifs), lorsqu'on applique sur le bobinage inducteur une tension sinusoïdale on récupère sur le bobinage induit une tension sinusoïdale dont l'amplitude varie linéairement en fonction de l'angle de pivotement du rotor.

Avec une géométrie de rotor telle que représentée à la figure 6, on peut ainsi mesurer un pivotement angulaire compris entre +90° et -90°, ce qui est largement suffisant, les pivotements des gouvernes canards étant d'habitude compris entre -10° et +10°.

Suivant une caractéristique de l'invention le rotor et le stator sont intégrés dans le dispositif de mesure, indépendamment l'un de l'autre et sans boîtier spécifique.

Suivant une autre caractéristique de l'invention, le stator 16 est ainsi rendu solidaire du support 3 par un surmoulage 18 qui entoure complètement le stator 16.

Le surmoulage est réalisé en une résine polymérisable.

Une telle disposition permet de façon compacte d'assurer à la fois la solidarisation stator/support et la tenue aux chocs et aux accélérations.

Ainsi grâce à invention le dispositif de mesure est disposé au plus près de la gouverne 2 et il mesure les angles de pivotement de celle ci, sans jeux de transfert de mesure, donc avec des erreurs minimisées.

Par ailleurs, le dispositif est robuste. Sa partie mobile est solidaire de la gouverne et sa partie fixe est montée sans jeux et à l'aide d'un matériau amortisseur.

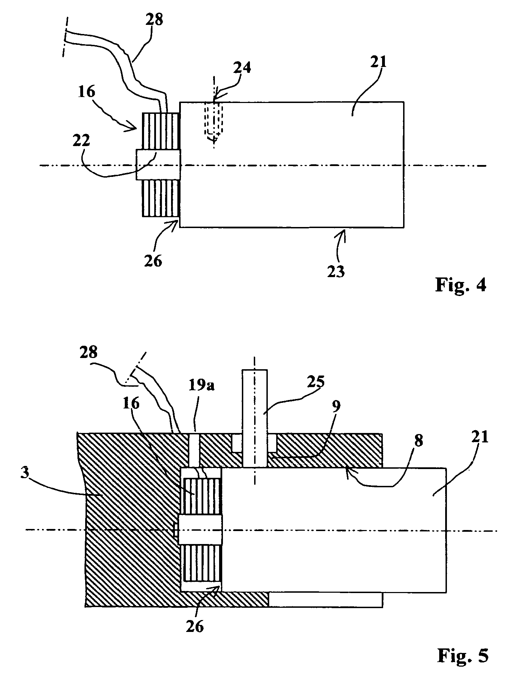

Le procédé de montage d'un tel dispositif va maintenant être décrit en référence aux figures 4 et 5.

Au cours d'une première étape qui est schématisée par la figure 4, on place le stator 16 sur un outillage 21 qui comporte une première portée cylindrique 22 coopérant avec l'alésage du stator 16. Cette portée 22 est délimitée par un épaulement 26.

L'outillage 21 comporte par ailleurs une deuxième portée cylindrique 23 de même diamètre que l'alésage 8 du support 3 qui est destiné à recevoir le stator 16.

L'outillage 21 comporte également un trou taraudé radial 24 qui est destiné à recevoir une tige 25 (figure 5) après mise en place de l'outillage dans le support 3.

On introduit ensuite (deuxième étape) l'outillage 21 portant le stator 16 dans l'alésage 8 du support 3 (figure 5). Au cours de cette introduction on fait passer les fils 28 par l'orifice 19c du support 3.

Pour assurer un montage correct du stator 16 il est nécessaire de le positionner d'une façon correcte dans son alésage 8, tant axialement qu'angulairement.

Conformément à l'invention le positionnement axial est assuré grâce à la tige 25 qui est fixée à l'outillage 21 au travers de la lumière 9 du support 3.

L'Homme du Métier définira l'outillage 21 de telle sorte que lorsque la tige 25 est ainsi positionnée, le stator 16 se trouve également axialement disposé à la place souhaitée.

Le positionnement angulaire du stator est assuré d'une façon grossière par le positionnement du fil 28 dans l'orifice 19c.

Une fois le stator 16 positionné, on injecte le matériau de surmoulage entre le stator 16 et le support 3 au travers de l'orifice 19b. Les orifices 19a et 19c permettent l'évacuation de l'air et le contrôle du remplissage.

L'orifice 19b est décalé axialement par rapport aux orifices 19a et 19c. Une telle disposition permet d'assurer un remplissage complet du logement du stator par la résine avant que cette dernière ne ressorte par les orifices 19a et 19c.

Avant de procéder à l'injection on assurera l'étanchéité entre l'outillage 21 et le stator 16.

On pourra par exemple réaliser l'outillage en polytetrafuoréthylène, et on chauffera alors le support 3 après mise en place de l'outillage 21 de façon à dilater ce dernier. Il suffit de chauffer à une température de l'ordre de 60°C pour assurer l'étanchéité souhaitée (ainsi que le blocage de l'outillage 21 dans son alésage 8).

Pour compléter l'étanchéité on pourra disposer de la pâte de rebouchage au niveau de la lumière 9 (pâte à modeler par exemple).

Après injection et séchage ou polymérisation de la résine 18 on refroidit le support 3 de façon à assurer la contraction de l'outillage 21 ce qui permet son extraction.

Par ailleurs on fixe le rotor 13 à l'axe 4 de l'ailette ou de la gouverne 2.

On positionne ensuite l'axe 4 dans le support 3 (donc le rotor 13 dans le stator 16) et on mesure la valeur angulaire donnée par le dispositif de mesure pour une position de l'ailette ou de la gouverne correspondant à un angle qui doit être considéré comme nul.

Ce montage du rotor dans le stator est représenté à la figure 7.

La mesure est faite à l'aide d'un banc de mesure adapté au transformateur rotatif constitué par le rotor associé au stator.

Cette mesure permet de connaître le décalage angulaire réel lié au montage.

Ce décalage peut ensuite être corrigé de deux façons différentes.

On pourra ainsi, à l'aide d'un outillage spécifique, faire pivoter le rotor 13 par rapport à l'axe 4 d'un angle inverse à la valeur mesurée préalablement.

Après cette correction angulaire on immobilisera le rotor 13 par rapport à l'axe 4 de l'ailette ou de la gouverne par un moyen de solidarisation, par exemple une goutte de colle appliquée au niveau de l'extrémité 11 portant la vis 15.

On peut d'une façon plus simple programmer au niveau de l'électronique de commande la correction angulaire souhaitée pour les valeurs qui seront mesurées par le dispositif.

Par sécurité, cette correction à l'aide de moyens logiciels sera de toute façon apportée systématiquement en intégration finale du projectile pour corriger une erreur résiduelle éventuelle au niveau des dispositifs de mesure (même si une correction mécanique plus grossière a été apportée au préalable).

L'invention a été décrite en référence à la mesure du débattement angulaire de gouvernes canard. Il est bien entendu possible de la mettre en oeuvre pour des mesures de débattements angulaires d'autres types d'ailettes.

## Revendications

1. Procédé de montage d'un dispositif de mesure de la position angulaire d'une ailette ou gouverne (2) de projectile montée pivotante par rapport à un support (3) solidaire du corps du projectile, le dispositif comportant un rotor (13) solidaire d'un axe (4) de l'ailette ou de la gouverne (2), un stator (16) bobiné fixé au support (3) et au moins deux bobinages, un bobinage inducteur et un bobinage induit, le rotor (13) coopérant avec le stator (16) pour constituer un transformateur rotatif, dans lequel :
- on dispose le stator au fond d'un alésage (8) porté par le support (3) et destiné à recevoir l'axe (4) de l'ailette ou de la gouverne (2),
- le stator (16) étant rendu solidaire du support (3) par un matériau de surmoulage (18) et le support comportant au moins deux orifices (19a, 19b, 19c) permettant de relier l'alésage (8) recevant le stator (16) et l'extérieur,
- on place le stator (16) sur un outillage (21) comportant une première portée cylindrique (22) coopérant avec un alésage du stator (16) porté par le support (3) et destiné à recevoir l'axe (4) de l'ailette ou de la gouverne (2) et une deuxième portée cylindrique (23) de même diamètre qu'un alésage (8) du support (3) destiné à recevoir le stator (16),
- on introduit l'outillage (21) portant le stator (16) dans l'alésage (8) du support (3),
- on injecte le matériau de surmoulage (18) entre le stator (16) et le support (3) au travers d'au moins un orifice (19b) reliant ledit alésage (8) à l'extérieur,
- l'outillage (21) comportant un trou radial (24) permettant le positionnement d'une tige (25) au travers d'une lumière (9) du support (3), la tige (25) assurant un positionnement axial de l'outillage (21) et du stator (16).

2. Procédé de montage selon la revendication 1, **caractérisé en ce que** l'outillage (21) est réalisé en polytétrafuoréthylène, et **en ce que** l'on chauffe le support (3) après mise en place de l'outillage (21) de façon à dilater ce dernier.

3. Procédé de montage selon la revendication 2, **caractérisé en ce qu'**on refroidit le support (3) après injection et séchage du matériau de surmoulage (18) de façon à contracter l'outillage (21) pour faciliter son extraction.

4. Procédé de montage selon une des revendications 1 à 3, **caractérisé en ce qu'**on fixe le rotor (13) à l'axe (4) de l'ailette ou de la gouverne puis on positionne celui ci dans le support (3) et on mesure la valeur angulaire donnée par le dispositif de mesure pour une position de l'ailette ou de la gouverne (2) correspondant à un angle nul.

5. Procédé de montage selon la revendication 4, **caractérisé en ce qu'**on corrige l'écart angulaire mesuré en faisant pivoter le rotor (13) d'un angle inverse à la valeur ainsi mesurée, puis on immobilise le rotor (13) par rapport à l'axe (4) de l'ailette ou de la gouverne (2) par un moyen de solidarisation (15).

## Claims

1. An assembly process for a device to measure the angular position of a projectile fin or elevon (2) which is mounted able to pivot with respect to a support (3) integral with the projectile body, said device incorporating a rotor (13) integral with an axis (4) of the fin or elevon (2), a coiled stator (16) fixed to the support (3) and at least two windings, an inductor winding and an induced winding, the rotor (13) cooperating with the stator (16) in order to constitute a rotating transformer, wherein:
- the stator (16) is positioned at the bottom of a bore hole (8) made in the support (3) and intended to receive the axis (4) of the fin or elevon (2),
- the stator (16) is made integral with the support (3) by an injection moulding material (18), and the support (3) incorporating at least two openings (19a, 19b, 19c) enabling the bore (8) receiving the stator (16) to be linked to the outside,
- the stator (16) is placed on tooling (21) which incorporates a first cylindrical seat (22) cooperating with the bore in the stator (16) supported by the support (3) and intended to receive the axis (4) of the projectile fine or elevon (2) and a second cylindrical seat (23) of the same diameter as a bore (8) in the support (3) intended to receive the stator (16),
- the tooling (21) carrying the stator (16) is introduced into the bore (8) in the support (3),
- an injection moulding material (18) is injected between the stator (16) and the support (3) through at least one opening (19b) linking said bore (8) to the outside,
- the tooling (21) incorporating a radial hole (24) enabling the positioning of a rod (25) through a slot (9) in the support (3), the rod (25) ensuring the axial positioning of the tooling (21) and stator (16).

2. An assembly process according to Claim 1, wherein the tooling (21) is made of polytetrafluorethylene, and wherein the support (3) is heated after the tooling (21) has been set into position in order to dilate said tooling.

3. An assembly process according to Claim 2, wherein the support (3) is cooled after the injection and drying of the moulding material (18) so as to contract the tooling (21) to facilitate its extraction.

4. An assembly process according to one of Claims 1 to 3, wherein the rotor (13) is fastened to the fin or elevon axis (4) then this is positioned in the support (3) and the angular value given by the measurement device will be measured for one position of the fin or elevon (2) corresponding to a nil angle.

5. An assembly process according to Claim 4, wherein the measured angular deviation is corrected by pivoting the rotor (13) by an inverse angle to the value thus measured, after which the rotor (13) is permanently immobilised with respect to the fin or elevon (2) axis (4) by integration means (15).

## Patentansprüche

1. Verfahren zur Montage einer Vorrichtung zur Messung der Winkelposition eines Projektilflügels oder -Steuerfläche (2), die drehbar in Bezug auf einen fest mit dem Körper des Projektils befestigten Träger (3) montiert ist, wobei die Vorrichtung einen fest mit einer Achse (4) des Flügels oder der Steuerfläche (2) verbundenen Rotor (13), einen gewickelten, am Träger (3) befestigten Stator (16) und wenigstens zwei Wicklungen umfasst, eine Erregerwicklung und eine Ankerwicklung, wobei der Rotor (13) mit dem Stator (16) zusammenwirkt, um einen Drehtransformator zu bilden, bei welchem:
- der Stator am Boden einer Bohrung (8) angeordnet wird, die von dem Träger (3) getragen wird und dafür vorgesehen ist, die Achse (4) des Flügels oder der Steuerfläche (2) aufzunehmen,
- wobei der Stator (16) fest mit dem Träger (3) durch ein Anformungsmaterial (18) verbunden ist und der Stator wenigstens zwei Öffnungen (19a, 19b, 19c) umfasst, die es ermöglichen, die den Stator (16) aufnehmende Bohrung (8) und den Außenbereich zu verbinden,
- der Stator (16) auf einem Werkzeug (21) angeordnet wird, das eine erste zylindrische Fläche (22), die mit einer Bohrung des Stators (16) zusammenwirkt, die von dem Träger (3) getragen wird und dafür vorgesehen ist, die Achse (4) des Flügels oder der Steuerfläche (2) aufzunehmen, und eine zweite zylindrische Fläche (23) mit gleichem Durchmesser wie eine Bohrung (8) des Trägers (3), die dafür vorgesehen ist, den Stator (16) aufzunehmen, umfasst,
- das Werkzeug (21), welches den Stator (16) trägt, in die Bohrung (8) des Trägers (3) eingebracht wird,
- das Anformungsmaterial (18) zwischen den Stator (16) und den Träger (3) durch wenigstens eine Öffnung (19b) eingespritzt wird, welche die genannte Bohrung (8) mit dem Außenbereich verbindet,
- wobei das Werkzeug (21) ein radiales Loch (24) umfasst, das die Positionierung einer Stange (25) durch ein Langloch (9) des Trägers (3) hindurch ermöglicht, wobei die Stange (25) eine axiale Positionierung des Werkzeuges (21) und des Stators (16) gewährleistet.

2. Montageverfahren nach Anspruch 1, **dadurch gekennzeichnet, dass** das Werkzeug (21) aus Polytetrafluorethylen hergestellt ist und dass der Träger (3) derartig erwärmt wird, nachdem das Werkzeug (21) eingesetzt ist, dass dieses Letztere ausgedehnt wird.

3. Montageverfahren nach Anspruch 2, **dadurch gekennzeichnet, dass** der Träger (3) nach Einspritzen und Trocknen des Anformungsmaterials (18) derartig abgekühlt wird, dass das Werkzeug (21) zusammengezogen wird, um seine Entnahme zu erleichtern.

4. Montageverfahren nach einem der Ansprüche 1 bis 3, **dadurch gekennzeichnet, dass** der Rotor (13) an der Achse (4) des Flügels oder der Steuerfläche befestigt wird und dann dieser in dem Träger (3) angeordnet wird und der Winkelwert gemessen wird, der von der Messvorrichtung für eine Position des Flügels oder der Steuerfläche (2) angegeben wird, die einem Winkel Null entspricht.

5. Montageverfahren nach Anspruch 4, **dadurch gekennzeichnet, dass** die gemessene Winkelabweichung korrigiert wird, indem der Rotor (13) um einen dem so gemessenen Wert entgegen gesetzten Winkel gedreht wird, dann der Rotor (13) in Bezug auf die Achse (4) des Flügels oder der Steuerfläche (2) durch ein Mittel zum Zusammenschluss (15) festgesetzt wird.
